# EUROPÄISCHE PATENTSCHRIFT

(11) **EP 2 102 406 B1**
(45) Veröffentlichungstag und Bekanntmachung des Hinweises auf die Patenterteilung: **22.08.2012**
(21) Anmeldenummer: 07816202.1
(22) Anmeldetag: 23.10.2007
(51) Int. Cl.: D06M 11/79, D06M 15/00, D06M 23/08

(54) **Verfahren und Verwendung einer Ausrüstungsformulierung zur hydrophoben Ausrüstung von fasrigen Substraten**
Process and use of a finish formulation for hydrophobic finishing of fibrous substrate
procédé et utilisation d'une formulation pour l'apprêtage hydrophobe de substrats fibreux

(30) Priorität: 10.11.2006 DE 102006053326
(43) Veröffentlichungstag der Anmeldung: 23.09.2009
(73) Patentinhaber: Bühler Partec GmbH, 66123 Saarbrücken (DE); Schoeller Textil AG, 9475 Sevelen (CH)
(72) Erfinder: TABELLION, Frank, 66123 Saarbrücken (DE); STEINGRÖVER, Klaus, 66125 Saarbrücken (DE); WAEBER, Peter, 9320 Arbon (CH); LOTTENBACH, Roland, 9422 Staad (CH)
(74) Vertreter: Hepp Wenger Ryffel AG
(86) Internationale Anmeldenummer: PCT/CH2007/000519
(87) Internationale Veröffentlichungsnummer: WO 2008/055369

(56) Entgegenhaltungen:
- EP-A- 0 825 241
- EP-A- 0 943 664

## Beschreibung

Die Erfindung bezieht sich auf ein Verfahren zur Herstellung einer Ausrüstungsformulierung, die so hergestellte Formulierung zum Ausstatten von Substraten sowie ausgestattete Substrate mit einer hydrophob und/oder oleophob wirkenden Ausrüstung bzw. Beschichtung. Bei den auszustattenden Substraten handelt es sich sowohl um harte als auch weiche Substrate, insbesondere jedoch um Fasern oder Textilien.

Die leichte Reinigung von Oberflächen, die Vermeidung von Anhaftungen bzw. die verbesserte Schmutzablösung oder reduzierte Wiederanschmutzung von Oberflächen haben erhebliche wirtschaftliche und technische Bedeutung in den unterschiedlichsten Anwendungsfeldern. In den letzten Jahren sind daher erhebliche Anstrengungen unternommen worden, Oberflächen durch gezielte Ausstattungen zu hydrophobieren und/oder oleophobieren. Derartige Beschichtungen, die man auch als "Ausrüstungsschicht" oder "Ausrüstung" bezeichnet, werden bei vielen Gebrauchsgegenständen als sogenannte "Antihaftschicht" oder "Easy-to-Clean-Schicht" verwendet.

Exemplarisch seien hier Metallsubstrate, wie z.B. Bratpfannen oder Drähte, sowie Substrate aus Polymermaterialen, wie z.B. Polyester, Polyamid, Baumwolle oder Schafwolle, insbesondere in Form von Fasern oder Textilien, genannt.

Es ist allgemein bekannt, dass zur Erzeugung von solchen Oberflächen insbesondere zwei Funktionsprinzipien zum Einsatz kommen können, nämlich der Lotus-Effekt, der durch eine Strukturierung der Oberfläche hervorgerufen wird, wodurch Schmutzpartikel besser an der Oberfläche eines Wassertropfens haften als an der strukturierten Oberfläche selbst und somit leicht abgespült werden können, und der Easy-to-Clean-Effekt, der durch die Verwendung von Additiven auf Alkyl-und/oder Fluorbasis bzw. alkyl-und/oder fluorhaltigen Formulierungen erzeugt wird und zu niederenergetischen Oberflächen führt, was eine Anhaftung der Schmutzpartikel erschwert und somit die Reinigung erleichtert.

EP-A-587667 beschreibt eine Beschichtungszusammensetzung auf Basis von anorganischen Polykondensaten zur Herstellung von Antihaftbeschichtungen. Der hydrophobe/olephobe Charakter wird durch die Verwendung von Silanen mit einer perfluorierten Alkylgruppe hervorgerufen, die eine Niederenergie-Oberfläche ausbilden. Diese Systeme zeichnen sich durch eine insgesamt hohe mechanische Stabilität aus, jedoch nicht in Bezug auf die perfluorierte Funktionsschicht. So sind die Antihafteigenschaften z.B. nach relativ wenigen Zyklen im Taber-Test vollständig verschwunden. Der hydrophobe/olephobe Charakter leidet ebenfalls stark bei längerem Kontakt mit Wasserdampf oder häufigem Kontakt mit Reinigungs- oder Waschmitteln, was mit geringer chemischer Stabilität der Funktionsschicht gleichzusetzen ist.

Fasermaterialien, insbesondere Gebrauchstextilien in Form von Flächengebilden, werden durch Aufbringen von fluorhaltigen Polymeren öl- und wasserabweisend ausgerüstet. Bei den Polymeren handelt es sich meist um perfluorierte Systeme, die als wässrige Dispersionen auf das Textil aufgebracht werden. Die Verwendung von perfluorierte Reste enthaltenden Acrylaten für die Behandlung von Textilien wird in US-A-4742140, US-A-5725789 und US-A-3491169 beschrieben. Die Verwendung von perfluorierten Polyurethanen geht aus US-A-5019428 hervor. In US-A-4264484 und in US-A-4401780 werden Gemische verschiedener perfluorierter Polymere beschrieben, die sich für die Behandlung textiler Flächengebilde eignen.

Der Nachteil dieser Systeme liegt in den nicht optimalen Eigenschaften im Hinblick auf die öl- und wasserabweisende Ausrüstung von Textilmaterialien. Ausserdem wird der gewünschte Effekt meist nicht oder nur mit sehr hohen Schichtdicken auf dem Textil erreicht. Der grösste Nachteil dieser Systeme liegt jedoch in der zu geringen mechanischen Stabilität und dem damit einhergehenden Effektverlust durch Abrieb sowohl im feuchten als auch trockenen Zustand.

Neben organischen Monomeren und Polymeren werden in den letzten Jahren auch vermehrt organische und anorganische Feststoffe einschliesslich Nanopartikel zur hydrophoben/olephoben Ausrüstung von Substraten eingesetzt.

So wird in der DE-A-102004035654 ein Verfahren zur Ausrüstung von saugfähigen Materialien unter Verwendung von anorganischen Feststoffen, wie z.B. mit Dimethylsiloxangruppen modifizierter pyrogener Kieselsäure, beschrieben. Die durch dieses Verfahren ausgerüsteten Textilien weisen jedoch in vielen Fällen unzureichende olephobe Eigenschaften auf. Die Ausrüstung ist auch nicht vollständig transparent. Eine vorherige Aktivierung der verwendeten Wirkstoffe, insbesondere der Nanopartikel wird nicht beschrieben.

EP-A-1268919 beschreibt ein Wirt-Gast-System auf Basis von hydrophoben Additiven zur Herstellung von Textilausrüstungen mit ausgeprägtem hydrophobem Oberflächencharakter. Die verwendeten hydrophoben Wirkstoffe bilden hierbei durch Selbstorganisation einen Gradienten, wobei es in der fertigen Textilausrüstung zu einer Anreicherung des Gasts an der Oberfläche kommt, die zu einer Hydrophobierung führt.

Nachteile dieses Systems sind a) eine geringe Oleophobierung, insbesondere bei der Verwendung von Wirkstoffen wie z.B. Wachs oder hydrophobiertem Siliciumdioxid und/oder b) die geringe Stabilität bei mechanischer Beanspruchung sowohl im feuchten als auch trockenen Zustand. Die Waschbeständigkeit, insbesondere die Langzeit-Waschbeständigkeit, sind ebenfalls verbesserungswürdig. Eine vorherige Aktivierung der verwendeten Wirkstoffe, insbesondere der Nanopartikel, wird nicht beschrieben.

In WO-A-2006/007754 wird vorgeschlagen, durch die Verwendung von perfluorierten Nanopartikeln textile Fasern und Flächengebilde wasser- und ölabweisend auszurüsten. Dieses System zeichnet sich im Vergleich zu den in EP-A-1268919 beschrieben Systemen durch eine verbesserte Oleophobierung aus, besitzt jedoch vergleichbare Nachteile hinsichtlich der mechanischen Stabilität in feuchtem und trockenem Zustand sowie der Langzeit-Waschbeständigkeit. Es wird auch keine vollständig transparente Ausrüstung erhalten. Eine vorherige Aktivierung der verwendeten Wirkstoffe, insbesondere der Nanopartikel, wird nicht beschrieben.

Die EP 0 825 241 offenbart eine Ausrüstungsformulierung zur hydrophoben Ausrüstung von Oberflächen, insbesondere Textilien. Die Ausrüstungsformulierung umfasst feine Partikel, welche an ihrer Oberfläche über reaktive Gruppen verfügen sowie ein Vernetzungsmittel, welches einerseits über mit den reaktiven Gruppen vernetzbare Seitengruppen sowie über hydrophobe Seitengruppen verfügt. Ferner umfasst die Ausrüstungsformulierung ein Bindemittel sowie ein organisches Lösungsmittel, insbesondere Butylacetat.

Die EP 0 943 664 beschreibt Nanopartikel enthaltende transparente Lackbindemittel mit verbesserter Verkratzungsbeständig- keit. Das Lackbindemittel.wird durch Düsenstrahldispergierung der Nanopartikel in einem Lösungsmittel hergestellt. Dabei wird unter anderem Wasser als Lösungsmittel eingesetzt sowie Mischungen von Wasser und organischen Lösungsmitteln.

Es bestand daher die Aufgabe eine Ausrüstungsformulierung bereitzustellen, die die oben aufgezeigten Nachteile nicht aufweist und mit der Oberflächen mit einer sehr guten Hydrophobierung/Oleophobierung bzw. Antihaftwirkung bei gleichzeitig hoher Transparenz ausgerüstet werden können. Überdies sollen die mechanischen Eigenschaften, wie z.B. Abriebfestigkeit und Waschbeständigkeit, gegenüber den bekannten Ausrüstungen verbessert werden.

Diese Aufgabe konnte überraschenderweise erreicht werden durch ein Verfahren zur Herstellung einer Ausrüstungsformulierung zur hydrophoben und/oder oleophoben Ausrüstung von Oberflächen, welche ein Dispersionsmittel, darin dispergierte aktivierte Teilchen mit hydrophoben und/oder oleophoben Oberflächengruppen und ein Bindemittel umfasst, bei dem Teilchen mit hydrophoben und/oder oleophoben Oberflächengruppen zur Aktivierung in dem Dispersionsmittel zerkleinert werden und das Bindemittel vor oder nach der Aktivierung zugesetzt wird.

Demgemäss umfasst die vorliegende Erfindung auch eine Ausrüstungsformulierung zur hydrophoben und/oder oleophoben Ausrüstung von Oberflächen, die ein Dispersionsmittel, darin dispergierte aktivierte Teilchen mit hydrophoben und/oder oleophoben Oberflächengruppen und ein Bindemittel umfasst.

Gemäss der Erfindung können Substrate bzw. Oberflächen mit der Ausrüstungsformulierung behandelt werden, welche ein Dispersionsmittel; eine Bindephase; sowie einen aktivierten hydrophoben und/oder oleophoben Wirkstoff (Teilchen) in dispergierter Form aufweist, um eine aus der Formulierung bestehende Schicht auf das Substrat aufzutragen und anschliessend zu härten.

Es hat sich dabei überraschend gezeigt, dass die Aktivierung des in der Formulierung enthaltenen dispergierten Wirkstoffs zu einer deutlichen Verbesserung der physikalischen Eigenschaften einer transparenten Ausrüstung bei sehr guter Hydrophobierung/Oleophobierung führt. Im Folgenden wird die Erfindung ausführlich erläutert.

Bei dem erfindungsgemässen Verfahren zur Herstellung einer Ausrüstungsformulierung von Oberflächen werden eine oder mehrere Sorten von Teilchen mit hydrophoben und/oder oleophoben Oberflächengruppen in einem Dispersionsmittel zerkleinert, um die hydrophob und/oder oleophob wirkenden Teilchen zu aktivieren.

Bei den Teilchen handelt es sich um feste Partikel bzw. Feststoffteilchen aus jedem beliebigen geeigneten Material. Im Folgenden werden die Ausdrücke Teilchen und Partikel miteinander austauschbar verwendet. Es kann sich z.B. um organische, auch polymere, z.B. aus Kunststoff, oder anorganische Teilchen handeln, wobei anorganische Partikel bevorzugt sind. Beispiele für organische Teilchen sind Dendrimere, Glukane oder Cyclodextrine, die gegebenenfalls Metallatome in komplexierter Form beinhalten. Beispiele für anorganische Teilchen sind Partikel aus einem Element, einer Legierung oder einer Elementverbindung. Die anorganischen Partikel bestehen vorzugsweise aus Verbindungen von Metallen oder Halbmetallen, wie z.B. Si oder Ge, oder Bor, besonders bevorzugt aus Metall- oder Halbmetalloxiden, einschliesslich hydratisierten Oxiden, Oxidhydroxiden oder Hydroxiden.

Beispiele für Teilchen aus einem Element sind Partikel aus Kohlenstoff, wie Russ oder Aktivkohle, aus einem Halbmetall, wie Silicium (einschliesslich technischem Si, Ferrosilicium und Reinsilicium) oder Germanium, oder einem Metall, wie z.B. Eisen (auch Stahl), Chrom, Zinn, Kupfer, Aluminium, Titan, Gold und Zink. Beispiele für Teilchen aus einer Legierung können Partikel aus Bronze oder Messing sein.

Beispiele für die bevorzugten Metallverbindungen und Verbindungen von Halbleiterelementen oder Bor sind gegebenenfalls hydratisierte Oxide, wie ZnO, CdO, SiO₂, GeO₂, TiO₂, ZrO₂, CeO₂, SnO₂, Al₂O₃ (in allen Modifikationen, insbesondere als Korund, Böhmit, AIO(OH), auch als Aluminiumhydroxid), In₂O₃, La₂O₃, Fe₂O₃, Cu₂O, Ta₂O₅, Nb₂O₅, V₂O₅, MoO₃ oder WO₃, entsprechende Mischoxide, z.B. Indium-Zinn-Oxid (ITO), Antimon-Zinn-Oxid (ATO), fluor-dotiertes Zinnoxid (FTO) und solche mit Perowskitstruktur, wie BaTiO₃ und PbTiO₃, Chalkogenide, wie beispielsweise Sulfide (z.B. CdS, ZnS, PbS und Ag₂S), Selenide (z.B. GaSe, CdSe und ZnSe) und Telluride (z.B. ZnTe oder CdTe), Halogenide, wie AgCl, AgBr, Agl, CuCl, CuBr, CdI₂ und PbI₂, Carbide, wie CdC₂ oder SiC, Silicide, wie MoSi₂, Arsenide, wie AlAs, GaAs und GeAs, Antimonide, wie InSb, Nitride, wie BN, AlN, Si₃N₄ und Ti₃N₄, Phosphide, wie GaP, InP, Zn₃P₂ und Cd₃P₂, sowie Carbonate, Sulfate, Phosphate, Silicate, Zirconate, Aluminate und Stannate von Elementen, insbesondere von Metallen oder Si, z.B. Carbonate von Calcium und/oder Magnesium, Silicate, wie Alkalisilicate, Talkum, Tone (Kaolin) oder Glimmer, und Sulfate von Barium oder Calcium. Weitere Beispiele für zweckmässige Teilchen sind ferner Magnetit, Maghemit, Spinelle (z.B. MgO·Al₂O₃), Mullit, Eskolait, Tialit, SiO₂·TiO₂, oder Biokeramiken, z.B. Calciumphosphat und Hydroxyapatit. Es kann sich um Teilchen aus Glas oder Keramik handeln.

Es kann sich dabei z.B. um Partikel handeln, die gewöhnlich für die Herstellung von Glas (z. B. Borosilicatglas, Natronkalkglas oder Kieselglas), Glaskeramik oder Keramik (z.B. auf Basis der Oxide SiO₂, BeO, Al₂O₃, ZrO₂ oder MgO oder der entsprechenden Mischoxide, Elektro- und Magnetokeramik, wie Titanate und Ferrite, oder Nichtoxidkeramiken, wie Siliciumnitrid, Siliciumcarbid, Bornitrid oder Borcarbid) verwendet werden. Es kann sich auch um Partikel handeln, die als Füllstoffe oder Pigmente dienen. Technisch wichtige Füllstoffe sind z.B. Füllstoffe auf Basis von SiO₂, wie Quarz, Cristobalit, Tripolit, Novaculit, Kieselgur, Kieselerde, pyrogene Kieselsäuren, Fällungskieselsäuren und Kieselgele, Silicate, wie Talkum, Pyrophyllit, Kaolin, Glimmer, Muskovit, Phlogopit, Vermiculit, Wollastonit und Perlite, Carbonate, wie Calcite, Dolomite, Kreide und synthetische Calciumcarbonate, Russ, Sulfate, wie Schwerspat und Leichtspat, Eisenglimmer, Gläser, Aluminiumhydroxide, Aluminiumoxide und Titandioxid, und Zeolithe. Es können auch Mischungen dieser Partikel verwendet werden.

Typische Materialien für die Partikel können z.B. mindestens ein Element ausgewählt aus C, N,O,S, B, Si, Al, Ti, Zr, Zn, Fe, Ag und Cu umfassen. Bevorzugt sind gegebenenfalls hydratisierte Siliciumoxide und Metalloxide, einschliesslich Oxid hydroxide und Hydroxide, wie Vanadium-, Eisen-, Wolfram-, Titan-, Aluminium- oder Zinkoxide oder Mischungen davon.

Die Herstellung solcher Teilchen ist bekannt. Beispiele für Verfahren zur Herstellung von Teilchen sind Flammpyrolyse, Plasmaverfahren, Gasphasenkondensationsverfahren, Kolloidtechniken, Präzipitationsverfahren, Sol-Gel-Prozesse, kontrollierte Nukleations- und Wachstumsprozesse, MOCVD-Verfahren und (Mikro)emulsionsverfahren. Diese Verfahren sind in der Literatur ausführlich beschrieben.

Die verwendbaren Teilchen sind im allgemeinen im Handel erhältlich. Beispiele für SiO₂-Teilchen sind handelsübliche Kieselsäureprodukte, z.B. Kieselsole, wie die Levasile®, Kieselsole der Bayer AG, oder pyrogene Kieselsäuren, z.B. die Aerosil^{®}-Produkte von Degussa. Selbstverständlich können auch alle als Füllstoffe eingesetzten Teilchen gewöhnlich im Handel erhalten werden. Bei den eingesetzten Teilchen kann es sich z.B. um Nanopartikel oder Mikropartikel handeln.

Die als Ausgangsmaterial eingesetzten Teilchen weisen hydrophobe und/oder oleophobe Oberflächengruppen auf. Solche hydrophoben und/oder oleophoben Oberflächengruppen sind dem Fachmann bekannt. Die Oberflächengruppen umfassen bevorzugt organische Gruppen, wie aliphatische, alicyclische oder aromatische Kohlenwasserstoffgruppen, z.B. lineares oder verzweigtes Alkyl, Cycloalkyl, Aryl, wie z.B. Phenyl oder Naphthyl, Alkaryl, Aralkyl, und Fluor enthaltenden Gruppen, wie fluorierte oder perfluorierte aliphatische, alicyclische oder aromatische Kohlenwasserstoffgruppen.

Besonders bevorzugt sind Fluor enthaltende Gruppen, insbesondere fluorierte Alkylgruppen oder perfluorierte Alkylgruppen, die die gegebenenfalls durch ein oder mehrere Sauerstoffatome unterbrochen sind, und/oder Alkylgruppen. Als hydrophoben und/oder oleophoben Gruppen eignen sich insbesondere Alkylgruppen mit 3 bis 30 oder mehr Kohlenstoffatomen und Alkylgruppen mit 1 bis 30 Kohlenstoffatomen, die mit mindestens einem Fluoratom, z.B. 1 bis 30 Fluoratomen, substituiert sind, vorzugsweise eine fluorierte Alkylgruppe mit 3 bis 20 C-Atomen.

Als Beispiele für fluorierte Alkylgruppen können CF₃CH₂CH₂-, C₂F₅CH₂CH₂-, n-C₆F₁₃CH₂CH₂-, i-C₃F₇OCH₂CH₂CH₂-, n-C₈F₁₇CH₂CH₂- und n-C₁₀F₂₁-CH₂CH₂- genannt werden. Beispiele für geeignete Alkylgruppen sind Propyl, Hexyl, Heptyl, Octyl, Nonyl, Hexadecyl oder Dodecyl.

Die Oberflächenmodifizierung von Teilchen mit bestimmten Gruppen, um die Teilchen mit einer oder mehreren zusätzlichen Funktionen zu versehen, wie z.B. im vorliegenden Fall mit einer hydrophoben und/oder oleophoben Wirkung, ist dem Fachmann vertraut und er kann solche oberflächenmodifizierten Teilchen ohne weiteres herstellen oder gegebenenfalls im Handel erwerben. Oberflächenmodifizierte Teilchen werden im allgemeinen durch Umsetzung der Teilchen mit geeigneten Oberflächenmodifizierungsmitteln erhalten, wobei die Zugabe des Oberflächenmodifizierungsmittel auch in situ während der Herstellung der Teilchen erfolgen kann. Die Umsetzung erfolgt unter solchen Bedingungen, dass eine Anbindung des Modifizierungsmittels, z.B. durch chemische Bindung oder Wechselwirkung, auf der Oberfläche der Teilchen erfolgt. Die Bedingungen hängen naturgemäss von der Art der Teilchen und der Oberflächenmodifizierungsmittel ab. Es kann ein einfaches Rühren bei Raumtemperatur ausreichen, gegebenenfalls sind aber auch ein Energieeintrag, z.B. durch Erwärmen notwendig. Der Belegungsgrad der Teilchenoberflächen mit den Modifizierungsmitteln kann z.B. durch das eingesetzte Mengenverhältnis der Edukte gesteuert werden.

Dem Fachmann ist bekannt, dass sich auf der Oberfläche von Teilchen in der Regel Gruppen befinden, wobei es sich bei diesen Oberflächengruppen um funktionelle Gruppen handeln kann, die im allgemeinen relativ reaktionsfähig sind. Beispielsweise befinden sich auf der Oberfläche von Teilchen Restvalenzen, wie Hydroxygruppen und Oxygruppen, z.B. bei Metalloxidpartikeln, oder Thiolgruppen und Thiogruppen, z.B. bei Metallsulfiden, oder Amino-, Amid- und Imidgruppen, z.B. bei Nitriden.

Das Oberflächenmodifizierungsmittel mit hydrophober und/oder oleophober Gruppe weist zum einen mindestens eine funktionelle Gruppe, die mit auf der Oberfläche der Teilchen vorhandenen reaktionsfähigen Gruppen unter Anbindung chemisch reagieren oder wechselwirken kann, und zum anderen mindestens eine hydrophobe und/oder oleophobe Gruppe auf. Die Anbindung kann durch chemische Bindung, wie kovalente, einschliesslich koordinative Bindungen (Komplexe), oder ionische (salzartige) Bindungen der funktionellen Gruppe mit den Oberflächengruppen der Teilchen erfolgen, während als Wechselwirkungen beispielhaft Dipol-Dipol-Wechselwirkungen, polare Wechselwirkungen, Wasserstoffbrückenbindungen und van der Waals-Wechselwirkungen zu nennen sind. Bevorzugt ist die Ausbildung einer chemischen Bindung. So kann zwischen den funktionellen Gruppen des Modifizierungsmittels und dem Partikel z.B. eine Säure/Base-Reaktion, eine Komplexbildung oder eine Veresterung stattfinden. Solche Oberflächenmodifizierungsmittel sind dem Fachmann bekannt und er kann ohne weiteres diejenigen auswählen, die für das jeweilige Teilchen geeignet sind.

Beispiele für hydrophobe und/oder oleophobe Gruppen sind oben aufgeführt. Bei der funktionellen Gruppe, die das Oberflächenmodifizierungsmittel umfasst, handelt es sich z.B. um Carbonsäuregruppen, Säurechloridgruppen, Estergruppen, Nitril- und Isonitrilgruppen, OH-Gruppen, Alkylhalogenidgruppen, SH-Gruppen, Epoxidgruppen, Anhydridgruppen, Säureamidgruppen, primäre, sekundäre und tertiäre Aminogruppen, Si-OH-Gruppen bzw. hydrolysierbare Reste von Silanen (nachstehend erläuterte Gruppen Si-X) oder C-H-acide Gruppierungen, wie ss-Dicarbonylverbindungen. Das Modifizierungsmittel kann auch mehr als eine derartige funktionelle Gruppe umfassen, wie z.B. in Aminosäuren oder EDTA.

Beispiele für geeignete Oberflächenmodifizierungsmittel sind demgemäss Mono- und Polycarbonsäuren, entsprechende Säureanhydride, Säurechloride, Ester und Säureamide, Alkohole, Alkylhalogenide, Aminosäuren, Imine, Nitrile, Isonitrile, Epoxyverbindungen, Mono- und Polyamine, ss-Dicarbonylverbindungen, Silane und Metallverbindungen, die über eine funktionelle Gruppe verfügen, die mit den Oberflächengruppen der Partikel reagieren kann, die jeweils eine hydrophobe und/oder oleophobe Gruppe aufweisen. Besonders bevorzugt eingesetzte Modifizierungsmittel mit hydrophober und/oder oleophober Gruppe sind Silane, Carbonsäuren, Carbonsäurederivate, wie Säureanhydride und Säurehalogenide, insbesondere Säurechloride, Alkohole, Alkylhalogenide, wie Alkylchloride, Alkylbromide und Alkyliodide, wobei der Alkylrest gegebenenfalls substituiert ist, insbesondere mit Fluor. Es können ein oder mehrere Modifizierungsmittel verwendet werden.

Als hydrophobe und/oder oleophobe Gruppe eignen sich z.B. die vorstehend genannten und insbesondere langkettige aliphatische Kohlenwasserstoffgruppen, z.B. mit 1 bis 30 oder mehr Kohlenstoffatomen, insbesondere Alkylgruppen, aromatische Gruppen, oder Gruppen, die mindestens ein Fluoratom aufweisen, wobei es sich vorzugsweise um Kohlenwasserstoffgruppen, insbesondere Alkylreste, mit 1 bis 20 oder mehr Kohlenstoffatomen und 1 bis 41 Fluoratomen handelt.

Bevorzugte Oberflächenmodifizierungsmittel sind hydrolysierbare Silane mit mindestens einer nicht hydrolysierbaren hydrophoben und/oder oleophoben Gruppe. Dabei handelt es sich besonders bevorzugt um hydrolysierbare Silane, die mindestens eine nicht hydrolysierbare Gruppe aufweisen, die hydrophob und/oder oleophob ist, insbesondere eine Gruppe, die mindestens ein Fluoratom (Fluorsilane) oder eine langkettige aliphatische Kohlenwasserstoffgruppe, z.B. mit 1 bis 30 Kohlenstoffatomen, vorzugsweise eine Alkylgruppe, oder eine aromatische Gruppe enthält.

Geeignete hydrolysierbare Silane mit hydrophober und/oder oleophober Gruppe besitzen z.B. die allgemeine Formel

RₐSiX₍₄₋ₐ₎ (I)

worin R gleich oder verschieden ist und einen nicht hydrolysierbaren Rest darstellt, wobei mindestens eine Gruppe R eine hydrophobe und/oder oleophobe Gruppe ist, X eine hydrolysierbare Gruppe oder OH ist und a den Wert 1, 2 oder 3, vorzugsweise 1 oder 2, hat.

Die hydrolysierbare Gruppe X ist z.B. Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen in der bzw. den Alkylgruppe(n).

Der nicht hydrolysierbare Rest R ist z.B. Alkyl (vorzugsweise C₁₋₃₀-Alkyl, wie z.B. Methyl, Ethyl, n-Propyl, Isopropyl, n-Butyl, s-Butyl und t-Butyl, Pentyl, Hexyl oder Cyclohexyl), Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl) und Aryl (vorzugsweise C₆₋₁₀-Aryl, wie z.B. Phenyl und Naphthyl), wobei mindestens eine Gruppe R eine hydrophobe und/oder oleophobe Gruppe ist.

Die hydrophobe und/oder oleophobe Gruppe R kann eine langkettige aliphatische Kohlenwasserstoffgruppe, z.B. mit 1 bis 30 C-Atomen, sein. Bei der langkettigen aliphatischen Kohlenwasserstoffgruppe handelt es sich bevorzugt um eine Alkylgruppe. Gegebenenfalls können auch Silane der Formel (I) verwendet werden, worin R eine gegebenenfalls substituierte aromatische Gruppe ist. Ein bevorzugtes Silan der Formel (I) hat nur eine nicht hydrolysierbare Gruppe, nämlich die hydrophobe und/oder oleophobe Gruppe R (a = 1).

Beispiele für hydrolysierbare Silane mit langkettiger aliphatischer Kohlenwasserstoffgruppe sind Hexadecyltrimethoxysilan (HDTMS), Dodecyltriethoxysilan und Propyltrimethoxysilan.

Die hydrophobe und/oder oleophobe Gruppe R in der Formel (I) ist besonders bevorzugt eine Kohlenwasserstoffgruppe, die mit mindestens einem Fluoratom substituiert ist Diese Silane bezeichnet man auch als Fluorsilane. Besonders bevorzugte hydrolysierbare Silanverbindungen besitzen daher die allgemeine Formel

Rf(R)_{b}SiX_{(3-b)} (II)

worin X und R wie in Formel (I) definiert sind, Rf eine nicht hydrolysierbare Gruppe ist, die 1 bis 41 Fluoratome an Kohlenstoffatome gebunden aufweist, die vorzugsweise durch mindestens zwei Atome, vorzugsweise eine Ethylen-, Propylen-, Ethylenoxy- oder Propylenoxygruppe, von Si getrennt sind, und b 0, 1 oder 2, bevorzugt 0 oder 1, ist R ist bevorzugt eine Alkylgruppe, insbesondere C₁₋₄-Alkyl wie Methyl oder Ethyl. Vorzugsweise enthalten die Gruppen Rf 3 bis 25 und insbesondere 3 bis 21 Fluoratome, die an aliphatische (einschliesslich cycloaliphatische) Kohlenstoffatome gebunden sind. Rf ist vorzugsweise eine fluorierte Alkylgruppe mit 3 bis 20 C-Atomen, die gegebenenfalls durch ein oder mehrere Sauerstoffatome unterbrochen ist.

Beispiele für Rf sind CF₃CH₂CH₂, C₂F₅CH₂CH₂, n-C₆F₁₃CH₂CH₂, i-C₃F₇OCH₂CH₂CH₂, n-C₈F₁₇CH₂CH₂ und n-C₁₀F₂₁-CH₂CH₂. Beispiele für einsetzbare Fluorsilane sind CF₃CH₂CH₂SiCl₂(CH₃), CF₃CH₂CH₂SiCl(CH₃)₂, CF₃CH₂CH₂Si(CH₃)(OCH₃)₂, C₂F₅-CH₂CH₂-SiZ₃, n-C₆F₁₃-CH₂CH₂SiZ₃, n-C₈F₁₇-CH₂CH₂-SiZ₃, n-C₁₀F₂₁-CH₂CH₂-SiZ₃ mit (Z = OCH₃, OC₂H₅ oder Cl); i-C₃F₇O-CH₂CH₂CH₂-SiCl₂(CH₃), n-C₆F₁₃-CH₂CH₂-Si(OCH₂CH₃)₂, n-C₆F₁₃-CH₂CH₂-SiCl₂(CH₃), n-C₆F₁₃-CH₂CH₂-SiCl(CH₃)₂ und (3,3,4,4,5,5,6,6,7,7,8,8,8-Tridecafluoroctyl)triethoxysilan (FTS).

Weitere konkrete Beispiele für Oberflächenmodifizierungsmittel mit hydrophober und/oder oleophober Gruppe sind 1H,1H-Pentadecafluoroctanol, Octanol, Nonanol, Decanol, Heptadecafluornonansäure, Stearinsäure, Heptafluorbuttersäurechlorid, Hexansäurechlorid, Hexansäuremethylester, Perfluorheptansäuremethylester, Perfluoroctansäureanhydrid, Hexansäureanhydrid, 1,1,1,2,2,3,3-Heptafluor-7,7-dimethyl-4,6-octandion, Hexylchlorid und Nonafluorbutylchlorid.

Das Oberflächenmodifizierungsmittel weist bevorzugt ein Molekulargewicht von nicht mehr als 1.500 und bevorzugter nicht mehr als 1.000 auf, es können aber auch Modifizierungsmittel mit höherem Molekulargewicht verwendet werden.

Die Teilchen können neben der Oberflächenmodifizierung mit einer hydrophoben und/oder oleophoben Gruppe mit einer oder mehreren zusätzlichen Gruppen auf der Oberfläche modifiziert sein, um den Teilchen eine oder mehrere weitere Funktionen zu verleihen. Diese zusätzlichen Gruppen weisen bevorzugt eine funktionelle Gruppe auf, über die z.B. Polymerisations-, Kondensations- oder Vernetzungsreaktionen erfolgen können. Diese zusätzlichen Gruppen können auf dieselbe Weise wie die hydrophoben und/oder oleophoben Gruppen durch ein Oberflächenmodifizierungsmittel auf die Teilchen aufgebracht werden. Alles vorstehend Gesagte bezüglich der Oberflächenmodifizierungsmittel und der Anbindung an die Teilchen für die hydrophobe und/oder oleophobe Gruppe gilt daher genauso für die Modifizierung mit einer zusätzlichen Gruppe, ausser dass statt einer hydrophoben und/oder oleophoben Gruppe eine andere zusätzliche Gruppe auf die Teilchen aufgebracht wird. Die Oberflächenmodifizierung mit diesen zusätzlichen Gruppen kann vor, nach oder gleichzeitig mit der hydrophoben und/oder oleophoben Modifizierung erfolgen.

Beispiele für solche zusätzlichen Gruppen, bevorzugt solche mit einer funktionellen Gruppe, die auf die Teilchenoberflächen aufgebracht werden können, sind kurzkettige Alkyl-, Alkenyl-, wie Vinyl- oder Allyl-, Epoxy-, Hydroxy-, Ether-, Amino-, Monoalkylamino-, Dialkylamino-, gegebenenfalls substituierte Anilino-, Amid-, Carboxy-, Acryl-, Acryloxy-, Methacrylat-, Methacryloxy-, Silyl-, Mercapto-, Cyano-, Alkoxy-, Isocyanato-, Aldehyd-, Alkylcarbonyl-, Säureanhydrid- und Phosphorsäuregruppen.

Beispiele für geeignete Oberflächenmodifizierungsmittel sind die vorstehend genannten, die aber statt einer hydrophoben und/oder oleophoben Gruppe eine andere zusätzliche Gruppe aufweisen. Beispielweise können Silane der allgemeinen Formel (I) eingesetzt werden, die keine hydrophobe und/oder oleophobe Gruppe aufweisen. Es kann z.B. auch ein Silan der Formel (I) eingesetzt werden, bei dem statt einer hydrophoben und/oder oleophoben Gruppe mindestens eine Gruppe R eine der vorstehend genannten funktionellen Gruppen umfasst, die über Alkylen-, Alkenylen- oder Arylen-Brückengruppen, die durch Sauerstoff- oder -NH-Gruppen unterbrochen sein können, an das Siliciumatom gebunden sein können. Die Brückengruppen enthalten z.B. 1 bis 18 Kohlenstoffatome.

Konkrete Beispiele für entsprechende Silane sind γ-Glycidyloxypropyltrimethoxysilan (GPTS), γ-Glycidyloxypropyltriethoxysilan (GPTES), 3-Aminopropyltrimethoxysilan (APTS), 3-(Meth)acryloxypropyltriethoxysilan oder 3-(Meth)acryloxypropyltrimethoxysilan. Weitere konkrete Beispiele für Oberflächenmodifizierungsmittel, die zur Einführung zusätzlicher Gruppen eingesetzt werden können, sind gesättigte oder ungesättigte Mono- und Polycarbonsäuren, wie z.B. Ameisensäure, Acrylsäure, Methacrylsäure oder Crotonsäure, Mono- und Polyamine, wie Methylamin, oder Ethylendiamin, ss-Dicarbonylverbindungen, wie Acetylaceton, oder Aminosäuren.

Die Teilchen mit hydrophoben und/oder oleophoben Oberflächengruppen sind in einem Dispersionsmittel dispergiert. Als Dispersionsmittel kann jedes dem Fachmann bekannte Dispersionsmittel eingesetzt werden. Der Fachmann kann ohne weiteres das für das jeweils eingesetzte oberflächenmodifizierte Teilchen geeignete Dispersionsmittel wählen. Es kann sich z.B. um jenes handeln, das bei der Oberflächenmodifizierung der Teilchen eingesetzt wurde.

Das geeignete Dispersionsmittel wird in Abhängigkeit von den zu dispergierenden Teilchen bevorzugt aus Wasser, insbesondere entionisiertem Wasser, oder organischen Lösungsmitteln ausgewählt, denkbar sind aber auch anorganische Lösungsmittel, wie z.B. Schwefelkohlenstoff. Als organische Dispersionsmittel sind sowohl polare als auch unpolare und aprotische Lösungsmittel geeignet. Beispiele sind Alkohole, wie z.B. aliphatische und alicyclische Alkohole mit 1 bis 8 Kohlenstoffatomen (insbesondere Methanol, Ethanol, n- und i-Propanol, Butanol, Octanol, Cyclohexanol), Ketone, wie z.B. aliphatische und alicyclische Ketone mit 1 bis 8 Kohlenstoffatomen (insbesondere Aceton, Butanon und Cyclohexanon), Ester, wie z.B. Essigsäureethylester und Glycolester, Ether, wie z.B. Diethylether, Dibutylether, Anisol, Dioxan, Tetrahydrofuran und Tetrahydropyran, Glycolether, wie Mono-, Di-, Tri- und Polyglycolether, Glycole, wie Ethylenglycol, Diethylenglycol und Propylenglycol, Amide und andere Stickstoffverbindungen, wie z.B. Dimethylacetamid, Dimethylformamid, Pyridin, N-Methylpyrrolidin und Acetonitril, Sulfoxide und Sulfone, wie z.B. Sulfolan und Dimethylsulfoxid, Nitroverbindungen, wie Nitrobenzol, Halogenkohlenwasserstoffe, wie Dichlormethan, Chloroform, Tetrachlorkohlenstoff, Tri-, Tetrachlorethen, Ethylenchlorid, Chlorfluorkohlenstoffe, aliphatische, alicyclische oder aromatische Kohlenwasserstoffe, z.B. mit 5 bis 15 Kohlenstoffatomen, wie z.B. Pentan, Hexan, Heptan und Octan, Cyclohexan, Benzine, Petrolether, Methylcyclohexan, Dekalin, Terpen-Lösungsmittel, Benzol, Toluol und Xylole. Selbstverständlich können auch Mischungen derartiger Dispersionsmittel eingesetzt werden.

Bevorzugt eingesetzte organische Dispersionsmittel sind aliphatische und alicyclische Alkohole, wie Ethanol, n- und i-Propanol, Glycole wie Ethylenglycol und Butylglycol, und aliphatische, alicyclische und aromatische Kohlenwasserstoffe, wie Hexan, Heptan, Toluol und o-, m- und p-Xylol.

Bei einer Variante des erfindungsgemässen Verfahrens kann das eingesetzte nachstehend erläuterte Bindemittel auch gleichzeitig die Funktion des Dispersionsmittels übernehmen, so dass für Dispersionsmittel und Bindemittel die gleiche Verbindung eingesetzt werden kann.

Als Bindemittel können alle dem Fachmann geläufigen Bindemittel eingesetzt werden. Es können auch Kombinationen verschiedener Bindemittel eingesetzt werden. Das Bindemittel kann auch als Bindephase bezeichnet werden. Die Bindemittel umfassen wie üblich auch entsprechende Vorstufen, die erst nach Polymerisations-, Kondensationsoder Härtungsreaktionen ihre Bindemittelwirkung entfalten. Beispiele für Bindemittel sind organische Monomere, Oligomere bzw. Präpolymere und/oder Polymere, hydrolysierbare anorganische Verbindungen, die gegebenenfalls zumindest teilweise nicht hydrolysierbare organische Gruppen aufweisen oder anorganische oder organisch modifizierte anorganische Kondensate oder Hydrolysate dieser hydrolysierbaren Verbindungen oder Kombinationen davon. Das Bindemittel kann z.B. mindestens ein Element ausgewählt aus C, Si, B, P, Al, Zr und Ti umfassen. Das Bindemittel umfasst bevorzugt mindestens eine funktionelle Gruppe. Beispiele für die funktionelle Gruppe sind Kohlenstoff-Kohlenstoff-Doppelbindungen, wie Vinyl und Allyl, Alkinyl, Alkoxycarbonyl, Epoxy, Carboxy, Carbonyl, Amino, Imino, Amido, Acryl-, Acryloxy-, Methacryl-, Methacryloxy-, Acrylat, Methacrylat, gegebenenfalls blockiertes Isocyanat, freies Isocyanat, Mercapto-, Cyano-, Aldehyd-, Nitrile, Hydroxy, Alkoxy, Silanolgruppen und Thiol. Das eingesetzte Bindemittel ist vorzugsweise polymerisierbar, kondensierbar oder vernetzbar, d.h. es besitzt funktionelle Gruppen, über die eine Polymerisation, Polykondensation oder Vernetzung möglich ist.

Bindemittel können in Form von Dispersionen oder Emulsionen vorliegen. Als Bindemittel können dem Fachmann bekannte organische Polymere eingesetzt werden, z. B. Polyacrylsäure, Polymethacrylsäure, Polyacrylate, Polymethacrylate, Polyolefine, z.B. Polybutadien, freie und blockierte Polyisocyanate, z.B. Oxim-blockierte Polyisocyanate, Polystyrol, Polyamide, Polyimide, Polyvinylverbindungen, wie Polyvinylether, Polyvinylchlorid, Polyvinylalkohol, Polyvinylbutyral, Polyvinylacetat und entsprechende Copolymere, z. B. Poly(ethylenvinylacetat), Polyester, einschliesslich ungesättigter Polyester, z. B. Polyethylenterephthalat oder Polydiallylphthalat, Polyarylate, Polyoxetane, Polycarbonate, Polyether, z. B. Polyoxymethylen, Polyethylenoxid oder Polyphenylenoxid, Polyetherketone, Polysulfone, Polyepoxide, Kunstharze und Fluorpolymere, z. B. Polytetrafluorethylen. Geeignete Fluorpolymere sind z.B. Fluorkohlenstoffharze mit fluorierten oder perfluorierten C₄-C₁₂-Gruppen oder -Seitenketten. Es können aber auch Vorstufen davon verwendet werden, also die entsprechenden organischen Monomere, Oligomere oder Präpolymere der genannten Polymere.

Als Bindemittel kommen auch Vernetzer allein oder in Kombination mit anderen Bindemitteln in Betracht, insbesondere solche, die mit Cellulose reagieren können (Cellulosevernetzer). Vernetzer werden häufig in Ausrüstungsformulierungen für Textilien eingesetzt, z.B. für eine "wash and wear"-Ausrüstung, Pflegeleicht-Ausrüstung usw. Handelsübliche Vernetzer sind z.B. die Knittex^{®}- und Lyofix^{®}-Produkte der Huntsman. Es kann sich um Eigenvernetzer, Semireaktantvernetzer oder Reaktantvernetzer handeln. Beispiele sind Methylolharnstoff-Produkte, wie Dimethylolharnstoff (DMU) und verethertes DMU, Melaminvernetzer, wie Melamin und N-Methylolmelamine, Vernetzer auf U-ron- oder Triazon-Basis, Tetramethylol-Acetylendiharnstoff, Dimethylolethylenhamstoff, gegebenenfalls modifizierter Dimethyloldihydroxyethylenharnstoff, Dimethylolpropylenharnstoff, Dimethylol-5-hydroxypropylenharnstoff, 4-Methoxy-5,5-dimethyl-N,N'-dimethylolpropylenhamstoff, Carbamate, gegebenenfalls modifizierter Dimethyldihydroxyethylenhamstoff, Acetale und Halbacetale und Sulfoniumverbindungen.

Als Bindemittel auf Basis rein anorganischer Polykondensate können hydrolysierbare Ausgangsverbindungen, insbesondere Metallalkoxide oder Alkoxysilane, oder daraus gebildete Hydrolysate oder Kondensate verwendet werden. Als Bindemittel auf Basis von organisch modifizierten anorganischen Polykondensaten, bevorzugt Polyorganosiloxanen, können ebenfalls hydrolysierbare Ausgangsverbindungen, insbesondere Metallalkoxide oder Alkoxysilane, oder daraus gebildete Hydrolysate oder Kondensate verwendet werden, wobei mindestens ein Teil der eingesetzten hydrolysierbaren Verbindungen einen nicht hydrolysierbaren organischen Rest umfasst. Die organisch modifizierten anorganischen Polykondensate oder Vorstufen davon können auch organische Reste mit funktionellen Gruppen enthalten, über die eine Polymerisation oder Vernetzung möglich ist, wie z.B. die vorstehend genannten funktionellen Gruppen für das organische Bindemittel.

Die Herstellung von anorganischen oder organisch modifizierten anorganischen Bindemitteln oder der Vorstufen davon kann insbesondere durch Hydrolyse und Kondensation von hydrolysierbaren Ausgangsverbindungen z.B. nach dem Sol-Gel-Verfahren erfolgen. Bei den hydrolysierbaren Ausgangsverbindungen handelt es sich um Elementverbindungen mit hydrolysierbaren Gruppen, wobei gegebenenfalls zumindest ein Teil dieser Verbindungen auch nicht hydrolysierbare Gruppen umfasst, oder Oligomere davon.

Bei den zur Herstellung der rein anorganischen Polykondensate oder deren Vorstufen verwendeten hydrolysierbaren Ausgangsverbindungen, die keine nicht hydrolysierbare Gruppe umfassen, handelt es sich z.B. um Verbindungen mindestens eines Elements M aus den Hauptgruppen III, IV und V und/oder den Nebengruppen II bis V des Periodensystems der Elemente. Bei dem Element handelt es sich bevorzugt um ein Metall oder Halbmetall, einschliesslich Si und B. Vorzugsweise handelt es sich um hydrolysierbare Verbindungen von Si, Al, B, Sn, Ti, Zr, V oder Zn oder Mischungen von zwei oder mehr dieser Elemente. Es können auch andere hydrolysierbare Verbindungen eingesetzt werden, z.B. solche von Metallen der Hauptgruppen I und II des Periodensystems (z.B. Na, K, Ca und Mg) und der Nebengruppen VI bis VIII des Periodensystems (z.B. Mn, Cr, Fe und Ni). Auch hydrolysierbare Verbindungen der Lanthaniden können eingesetzt werden.

Zur Herstellung von organisch modifizierten anorganischen Bindemitteln werden eine oder mehrere hydrolysierbare Verbindungen, die mindestens eine nicht hydrolysierbare organische Gruppe umfassen, allein oder in Kombination mit den vorstehend erläuterten hydrolysierbaren Verbindungen ohne nicht hydrolysierbare Gruppen eingesetzt. Als hydrolysierbare Ausgangsverbindung, die mindestens eine nicht hydrolysierbare Gruppe aufweist, werden bevorzugt hydrolysierbare Organosilane oder Oligomere davon eingesetzt.

Beispiele für einsetzbare hydrolysierbare Silane mit nicht hydrolysierbaren Gruppen sind Silane der allgemeinen Formel RaSiX₍₄₋ₐ₎, worin die Reste R gleich oder verschieden sind und nicht hydrolysierbare Gruppen darstellen, die Reste X gleich oder verschieden sind und hydrolysierbare Gruppen oder Hydroxylgruppen bedeuten und a 1, 2 oder 3, bevorzugt 1, ist, oder einem davon abgeleiteten Oligomer.

In der allgemeinen Formel sind die hydrolysierbaren Gruppen X, die gleich oder voneinander verschieden sein können, beispielsweise Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen. Bevorzugte hydrolysierbare Reste sind Halogen, Alkoxygruppen und Acyloxygruppen. Besonders bevorzugte hydrolysierbare Reste sind C₁₋₄-Alkoxygruppen, insbesondere Methoxy und Ethoxy.

Bei den nicht hydrolysierbaren Resten R, die gleich oder voneinander verschieden sein können, kann es sich um nicht hydrolysierbare Reste R mit einer funktionellen Gruppe, über die z.B. eine Vernetzung möglich ist, oder um nicht hydrolysierbare Reste R ohne eine funktionelle Gruppe handeln.

Der nicht hydrolysierbare Rest R ohne funktionelle Gruppe ist beispielsweise Alkyl (vorzugsweise C₁₋₈-Alkyl, wie Methyl, Ethyl, n-Propyl, Isopropyl, n-Butyl, s-Butyl und tert.-Butyl, Pentyl, Hexyl, Octyl oder Cyclohexyl), Aryl (vorzugsweise C₆₋₁₀-Aryl, wie z.B. Phenyl und Naphthyl) sowie entsprechende Alkylaryle und Arylalkyle. Die Reste R und X können gegebenenfalls einen oder mehrere übliche Substituenten, wie z.B. Halogen oder Alkoxy, aufweisen.

Spezielle Beispiele für funktionelle Gruppen, über die eine Vernetzung möglich ist, sind z.B. die Epoxid-, Hydroxy-, Ether-, Amino-, Monoalkylamino-, Dialkylamino-, gegebenenfalls substituierte Anilino-, Amid-, Carboxy-, Vinyl-, Allyl-, Alkinyl-, Acryl-, Acryloxy-, Methacryl-, Methacryloxy-, Mercapto-, Cyano-, Alkoxy-, Isocyanato-, Aldehyd-, Alkylcarbonyl-, Säureanhydrid- und Phosphorsäuregruppe. Diese funktionellen Gruppen sind über Alkylen-, Alkenylen- oder Arylen-Brückengruppen, die durch Sauerstoff- oder -NH-Gruppen unterbrochen sein können, an das Siliciumatom gebunden. Beispiele für nicht hydrolysierbare Reste R mit Vinyl- oder Alkinylgruppe sind C₂₋₆-Alkenyl, wie z.B. Vinyl, 1-Propenyl, 2-Propenyl und Butenyl und C₂₋₆-Alkinyl, wie z.B. Acetylenyl und Propargyl. Die genannten Brückengruppen und gegebenenfalls vorliegende Substituenten, wie bei den Alkylaminogruppen, leiten sich z.B. von den oben genannten Alkyl-, Alkenyl- oder Arylresten ab. Natürlich kann der Rest R auch mehr als eine funktionelle Gruppe aufweisen.

Die anorganischen oder organisch modifizierten anorganischen Bindemittel aus den genannten hydrolysierbaren Verbindungen werden vorzugsweise durch ein Sol-Gel-Verfahren unter Bildung der Hydrolysate und Kondensate hergestellt oder gehärtet. Beim Sol-Gel-Verfahren werden gewöhnlich hydrolysierbare Verbindungen mit Wasser, gegebenenfalls unter saurer oder basischer Katalyse, hydrolysiert und gegebenenfalls zumindest teilweise kondensiert. Die Hydrolyse- und/oder Kondensationsreaktionen führen zur Bildung von Verbindungen oder Kondensaten mit Hydroxy-, Oxogruppen und/oder Oxobrücken, die als Vorstufen dienen. Durch geeignete Einstellung der Parameter, z.B. Kondensationsgrad, Lösungsmittel, Temperatur, Wasserkonzentration, Dauer oder pH-Wert, kann ein Sol erhalten werden, das als Bindemittel geeignet ist. Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

In der Ausrüstungsformulierung können ferner nach Bedarf weitere Additive zugegeben werden. Es kann sich insbesondere um Additive handeln, die in üblichen Ausrüstungsformutierungen eingesetzt werden. Beispiele sind Netzmittel, Verdickungsmittel, Dispergiermittel, Initiatoren, Katalysatoren, organische oder anorganische IR-und UV-Schutzmittel, Haftvermittler, Weichmacher, Antistatika, Biozide, Flammschutzmittel, lösliche und partikuläre Farbstoffe, optische Aufheller, Schlebefestmittel, Maschenfestmittel (Anti-snag-Mittel), Kaschiermittel, organische und anorganische Nanopartikel und Mikropartikel, Kohlenstoff-Nanoröhren. Die Nanopartikel und Mikropartikel können z.B. keine Oberflächengruppen aufweisen oder mit Gruppen oberflächenmodifiziert sein, die insbesondere keine hydrophoben und/oder oleophoben Gruppen enthalten. Als Beispiele für die Nano- und Mikropartikel kann auf die vorstehend beschriebenen Beispiele für Teilchen verwiesen werden. Beispiele sind z.B. Teilchen von ZnO oder Ag, um der Ausrüstung mikrobizide Eigenschaften zu verleihen. Nanopartikel sind Teilchen im Nanometerbereich (mittlere Teilchengrösse unter 1 m) und Mikropartikel sind Teilchen im Mikrometerbereich (mittlere Teilchengrösse unter 1 mm).

Initiatoren oder Katalysatoren können z.B. enthalten sein, um Polymerisations-, Kondensations- oder Vernetzungsreaktionen zu unterstützen. Für die vorstehend genannten Vernetzer bzw. Cellulosevernetzer sind z.B. häufig Katalysatoren erforderlich. Beispiele sind Ammonsalz-Katalysatoren, wie Diammonphosphat, Monoammonphosphat, Ammonnitrat, Ammonchlorid und Ammonsulfat, Metallsalz-Katalysatoren, wie Magnesiumchlorid, Magnesiumnitrat, Zinkchlorid, Zinknitrat, Natriumfluoroborat, Zinkfluoroborat, organische Aminhydrochlorid-Katalysatoren und Säure-Katalysatoren.

Die Bestandteile der Ausrüstungsformullerung können in jeder beliebigen Reihenfolge miteinander gemischt werden. Die Mischung des Bindemittels und der gegebenenfalls zugesetzten Additive kann vor, während oder nach der Aktivierungsbehandlung erfolgen. Im Sonderfall kann das eingesetzte Bindemittel gleichzeitig als Dispersionsmittel dienen. Die in dem Dispersionsmittel dispergierten Teilchen mit hydrophoben und/oder oleophoben Oberflächengruppen werden gemäss dem erfindungsgemässen Verfahren durch eine Zerkleinerungsbehandlung aktiviert. Die Zerkleinerungsbehandlung findet insbesondere in Abwesenheit von Oberflächenmodifizierungsmitteln statt, die insbesondere durch chemische Bindung, wie eine kovalente oder koordinative Bindung, an der Oberfläche der Teilchen angebunden werden können (irreversible Bindung). Dagegen stört die Anwesenheit von Substanzen wie Netzmitteln, die gegebenenfalls eine unspezifische nicht chemische Wechselwirkung mit den Teilchen eingehen können (reversible Bindung), in der Regel nicht Ihr Einsatz kann z.B. als Dispergierhilfe sogar zweckmässig sein. Die Zerkleinerung der oberflächenmodfizierten Teilchen kann durch jede, dem Fachmann bekannte Massnahme erfolgen. Die Teilchen können z.B. mit Ultraschall behandelt werden, um eine Zerkleinerung bzw. Dispergierung zu bewirken. Vorzugsweise werden die Teilchen aber mechanisch zerkleinert, bevorzugt durch Scherung und/oder Prallung. Die Aktivierung durch Zerkleinerungsbehandlung erfolgt bevorzugt in einer Dispergiermaschine.

Die mechanische Zerkleinerung findet im allgemeinen in Mühlen, Knetern, Walzenstühlen oder auch z.B. in Düsenstrahldispergatoren statt. Geeignete Zerkleinerungsmaschinen für die mechanische Zerkleinerung sind beispielsweise Homogenisatoren, Turborührer, Mühlen mit losen Mahlwerkzeugen, wie Kugel-, Stab-, Trommel-, Konus-, Rohr-, Autogen-, Planeten-, Schwing- und Rührwerksmühlen, Scherwalzenkneter, Mörsermühlen, Kolloidmühlen und Walzenstühle. Die Aktivierung erfolgt bevorzugt durch Nassvermahlung in einer Mühle mit Mahlhilfskörpem, in einem Walzwerk mit mindestens einem Walzenspalt oder in einem Düsenstrahl-Dispergator. Die Zerkleinerung wird bevorzugt bei Raumtemperatur ausgeführt. Die Dauer hängt von der Art der Mischung und der verwendeten Zerkleinerungsmaschine ab.

Es werden z.B. Mühlen mit losen Mahlwerkzeugen verwendet. Die Mahlwerkzeuge oder Mahlkörper sind z.B. Kugeln, Stäbe oder kurze Zylinderstücke. Der Behälter führt z.B. eine Dreh-, Planeten- oder Schüttelbewegung aus oder die Mahlkörper werden mit einem Rührwerk bewegt. Zweckmässige Mühlen sind Rührwerkskugelmühlen mit einem sich bewegenden Rührwerk und Mahlkugeln als Mahlkörper.

Bevorzugt werden Mühlen mit kleinen Mahlkörpern verwendet, wodurch man in der Lage ist, kleindimensionierte Scherkräfte aufzubringen. Die Grösse der Mahlkörper kann z.B. im Bereich von 0,1 bis 5 mm, bevorzugt 0,3 bis 3 mm und besonders bevorzugt 0,5 bis 2 mm betragen. Die Mahlkörper bestehen gewöhnlich aus Stahl, Kunststoff, Hartmetall, Al₂O₃, Achat, Zirconiumsilicat, ZrO₂, Y-ZrO₂, Ce-ZrO₂, Mg-ZrO₂, Glas, SiC, SiN oder Mischungen dieser Materialien, besonders bevorzugte Mahlkörpermaterialien sind stabilisierte Zirconiumoxide, Zirconsilicat und Stahl.

Die Aktivierung oder Zerkleinerung kann auch in einem zwei- oder mehrstufigen Verfahren erfolgen. Z.B. kann beim Mahlen mit Mahlkörpern ein Mahlschritt mit gröberen Mahlkörpern vorgeschaltet werden und anschliessend eine Feinmahlung erfolgen. Die Aktivierung kann unterstützt werden durch zusätzlichen Energieeintrag (neben der einwirkenden mechanischen Energie) z.B. mittels Mikrowelle und/oder Ultraschall, wobei diese beiden Methoden auch gleichzeitig eingesetzt werden können. Der Energieeintrag in die Dispersion erfolgt besonders bevorzugt direkt in der Zerkleinerungsmaschine, kann aber auch ausserhalb der Zerkleinerungsmaschine im Produktkreislauf erfolgen. Bei der Aktivierungsbehandlung wird eine genügend hohe Energie eingebracht, um eine Zerkleinerung zu erreichen. Die erforderliche Energie hängt im grossen Umfang von den zu zerkleinernden Teilchen, der Menge an eingesetztem Dispersionsmittel der eingesetzten Zerkleinerungsmaschine usw. ab und kann in weiten Bereichen variieren. Der Fachmann kann ohne weiteres die für die Zerkleinerung erforderlichen Parameter einstellen. Für die Zerkleinerungsbehandlung kann z.B. ein Energieeintrag von mindestens 50 kWh/t Dispersion, bevorzugt mindestens 100 kWh/t Dispersion, bestimmt unter Verwendung einer Kugelmühle, zweckmässig sein. Die Dispersion bezieht sich auf die Dispersion, die der Zerkleinerungsbehandlung unterworfen wird.

Die erfindungsgemässe Aktivierung wird vorzugsweise bei einer Temperatur von 0°C bis zur Siedetemperatur des Dispersionsmittels, z.B. von Raumtemperatur (ca. 20°C) bis zur Siedetemperatur des Dispersionsmittels durchgeführt. Durch geeignete Temperierung (Kühlung) des Mahlraums der Mühle sind diese entsprechenden Arbeitstemperaturen einstellbar. Das Verfahren kann sowohl kontinuierlich im Einpassagenbetrieb, Mehrpassagenbetrieb (Pendelverfahren) oder Kreisverfahren als auch diskontinuierlich im Batchbetrieb durchgeführt werden.

Überraschenderweise wird durch die Zerkleinerung der Teilchen mit hydrophoben und/oder oleophoben Oberflächengruppen eine Aktivierung dieser Teilchen erreicht, wodurch eine Ausrüstungsformulierung mit verbesserten Eigenschaften erhalten wird, wie in den nachstehenden Beispielen gezeigt. Insbesondere können mit der Ausrüstungsformulierung Oberflächen mit einer sehr guten Hydrophobierung/Oleophobierung bzw. Antihaftwirkung bei gleichzeitig hoher Transparenz ausgerüstet werden. Überdies können Ausrüstungen mit verbesserten mechanischen Eigenschaften, wie z.B. Abriebfestigkeit und Waschbeständigkeit, gegenüber den bekannten Ausrüstungen erhalten werden.

Ohne sich an eine Theorie binden zu wollen, wird angenommen, dass diese Effekte damit zusammenhängen, dass durch die Zerkleinerungsbehandlung kleinere Teilchen bzw. Bruchstellen gebildet werden, wobei Teilflächen (Bruchflächen) auf der Oberfläche der Teilchen gebildet werden, die keine Oberflächenmodizierung aufweisen und damit "aktiv", d.h. reaktionsfähig sind. Bei der Zerkleinerung kann es sich auch um eine Deagglomerierung handeln, wenn die oberflächenmodifizierten Teilchen als Agglomerate vorliegen, oder eine solche Deagglomerierung umfassen. Je nach Menge des eingesetzten Bindemittels kann das Bindemittel als Klebephase oder als Bindephase, bei der die Teilchen in einer durch das Bindemittel gebildeten Matrix eingelagert sind, wirken.

Die durch die Zerkleinerung gebildeten Bruchflächen auf den Teilchen können verschiedene Effekte haben. Zum einem besitzen die Teilchen dadurch zwei "Seiten" mit unterschiedlichen Eigenschaften, nämlich zum einen die Oberfläche mit den hydrophoben und/oder oleophoben Gruppen und zum anderen die freigelegten Bruchflächen ohne diese Gruppen. Die unterschiedlichen Eigenschaften der Flächen können zu einer unterschiedlichen Kompatibilität oder Wechselwirkung der beiden "Seiten" mit dem Substrat, dem Bindemittel bzw. der daraus gebildeten Matrix und der Aussenumgebung (Luft) führen. Dies kann je nach Fall zu einer Anreicherung und/oder Ausrichtung der Teilchen in eine bestimmte Richtung in der durch das Bindemittel gebildete Matrix der Ausrüstung führen, z.B. zur Aussenumgebung oder bevorzugt zur Substratoberfläche hin. Unter Ausrichtung wird hier die bevorzugte Ausrichtung der "Seite" mit der freigelegten Bruchfläche hin zu einer bestimmten Richtung, etwa in Richtung zur Substratoberfläche, verstanden, die sich z.B. aus einer besseren Kompatibilität dieser Grenzflächen ergibt. Ober die freigelegte Bruchfläche können die Teilchen z.B. an der Substratoberfläche, etwa durch gute Kompatibilität oder Wechselwirkungen, angebunden werden ("andocken"), was zur verbesserten Haftung beitragen kann. Ferner können die freigelegten Bruchflächen der Teilchen, die ja aktivierte bzw. reaktionsfähige Oberflächengruppen aufweisen, auch direkte chemische Bindungen mit dem Bindemittel oder bevorzugt mit der Substratoberfläche ausbilden, was zu einer noch stärkeren Anbindung führt.

Es sind auch Fälle denkbar, bei denen eine Anreicherung der Teilchen in eine bestimmte Richtung wie der Aussenumgebung gerade vermieden und durch die Aktivierung eine homogenere Verteilung in der Matrixphase ermöglicht wird.

Gemäss der Erfindung kann die modifizierte Oberfläche der Teilchen einerseits eine spezifische schmutzabweisende Funktion (Oleophobierung und/oder Hydrophobierung) und andererseits über die freigelegte Bruchfläche eine spezifische an der Substratoberfläche anbindende bzw. "andockende" Funktion haben. So lassen sich einerseits die Funktionalisierung (Schmutzabweisung, Oleophoblerung, Hydrophobierung) der ausgerüsteten Substratoberfläche und andererseits die Stärke der Verbindung zwischen den Teilchen und dem Substrat durch zweckmässige Auswahl der Teilchen-Oberflächenmodifizierung und des Teilchen-Kernmaterials (Zusammensetzung der Teilchen) optimieren, insbesondere z.B. für Polyester-Gewebe, Protein-Gewebe, Cellulose-Gewebe und Metallgewebe.

Die in der erfindungsgemässen Ausrüstungsformulierung enthaltenen Teilchen mit hydrophoben und/oder oleophoben Oberflächengruppen weisen nach der Aktivierung bevorzugt eine spezifische Oberfläche zwischen 10 und 1.000 m²/g bestimmt nach dem BET-Verfahren durch Stickstoffadsorption auf. Die Konzentration der aktivierten Teilchen mit hydrophoben und/oder oleophoben Oberflächengruppen in der Ausrüstungsformulierung kann in breiten Bereichen variieren, sie liegt aber bevorzugt im Bereich von 0,001 bis 50 Gew.%, bevorzugter 0,01 bis 40 Gew.-% und besonders bevorzugt 0,04 bis 30 Gew.-% bezogen auf das Gesamtgewicht der Ausrüstungsformulierung, einschliesslich Dispersionsmittel. Die Ausrüstungsformulierung kann z.B. eine Ausrüstungsflotte, ein Beschichtungscompound oder eine Lackformulierung sein.

Die erfndungsgemässe Ausrüstungsformulierung eignet sich insbesondere zur Ausrüstung von Oberflächen bzw. Substraten, um diese mit einer hydrophob und/oder oleophob wirkenden Ausrüstung bzw. Beschichtung zu versehen. Bei den auszustattenden Oberflächen oder Substraten kann es sich sowohl um harte als auch weiche oder flexible Substrate handeln, besonders bevorzugt handelt es sich aber um Fasern oder Textilien, insbesondere in Form von Flächengebilden. Weitere geeignete Substratoberflächen, die mit der Ausrüstungsformulierung hydrophob und/oder oleophob ausgestattet werden können, sind z.B. aus Glas, Keramik, Metall, Holz oder Kunststoff, wobei die Oberflächen auch lackiert, grundiert oder auf andere Weise vorbehandelt sein können. Beispielhaft seien Metallsubstrate, wie z.B. Bratpfannen, Drähte oder Metallgewebe, Proteingewebe, sowie Substrate aus Polymermaterialen, einschliesslich synthetischen und natürlichen Fasern und Geweben, wie z.B. Polyester, Polyamid, Baumwolle, Cellulose oder Schafwolle, insbesondere in Form von Fasern oder Textilien, genannt.

Die Substrate bzw. Oberflächen, insbesondere die Fasern, Textilien und Flächengebilde, können vor dem Auftrag der Ausrüstungsformulierung vorbehandelt werden, z.B. durch Aufbringung eines Primers oder durch eine andere Art der Vorbehandlung, die zu einer verbesserten Haftung auf dem Substrat führt. Beispiele für geeignete Primer sind Acrylate, Tanine, Brechweinstein, quaternäre Aminverbindungen, Silane, Polysilazane, Ormocere und Nanomere, sowie Nanopartikel. Weitere geeignete Vorbehandlungen sind z.B. das Abschälen der Oberfläche durch Behandlung mit Säuren oder Laugen, Plasma- oder Coronabehandlung und Plasmaoxidation/-polymerisation.

Zur hydrophoben und/oder oleophoben Ausrüstung der Oberflächen mit der erfindungsgemässen Ausrüstungsformulierung können alle gängigen Verfahren eingesetzt werden, die für Ausrüstungsformulierungen nach dem Stand der Technik üblich sind. Dabei wird die erfindungsgemässe Ausrüstungsformulierung, die ein Dispersionsmittel, darin dispergierte aktivierte Teilchen mit hydrophoben und/oder oleophoben Oberflächengruppen und ein Bindemittel umfasst, auf eine Oberfläche eines Gegenstandes aufgetragen und dann getrocknet und/oder gehärtet. Die erfindungsgemässe Ausrüstungsformulierung eignet sich für Ausrüstungen, die transparent sind.

Für den Auftrag der Ausrüstungsformulierung eignen sich alle üblichen Auftragverfahren, wobei die Art der auszurüstenden Oberfläche zu berücksichtigen ist. Als Auftragverfahren eignet sich z.B. ein Imprägnier- oder Beschichtungsverfahren. Beispiele für übliche Auftragverfahren sind Tauchen, Rollen, Rakeln, Fluten, Ziehen, Klotzen, Sprühen, Schleudern oder Aufstreichen.

Nach dem Auftrag wird die Ausrüstungsformulierung getrocknet und/oder gehärtet, um die hydrophob und/oder oleophob ausgerüstete Oberfläche des Gegenstands zu erhalten. Eine Trocknung kann durch teilweises oder vollständiges Entfernen des Dispersionsmittels erfolgen, in der Regel durch einfaches Verdampfen des Dispersionsmittels. Die Trocknung kann z.B. durch erhöhte Temperaturen, einem Luftstrom und/oder vermindertem Druck unterstützt werden. Gegebenenfalls wird bereits durch die Trocknung die fertige gehärtete Ausrüstung erhalten.

Vorzugsweise erfolgt nach der Trocknung oder gegebenenfalls ohne vorherige Trocknung eine Härtung der aufgetragenen Formulierung. Die Härtung kann nach den üblichen Verfahren erfolgen, z.B durch Erwärmen und/oder aktinische Strahlung. Bei diesem Härtungsschritt können die vorstehend erläuterten, in der Ausrüstungsformulierung enthaltenen funktionellen Gruppen Polymerisations-, Kondensations- oder Vernetzungsreaktionen eingehen, die neben der Härtung der Ausrüstung auch eine verbesserte Haftung an der zu behandelnden Oberfläche bewirken können.

Es ist bevorzugt, dass die Teilchen mit hydrophoben und/oder oleophoben Oberflächengruppen mit der Ausrüstung verbunden werden, an der Oberfläche der Ausrüstung oder an der Grenzfläche Substrat/Ausrüstung angereichert werden oder innerhalb der Ausrüstung oder an der Grenzfläche Substrat/Ausrüstung ausgerichtet werden.

Die Erfindung wird durch die nachfolgenden Beispiele weiter erläutert. Dabei sind die eingesetzten Pluronic^{®}-Produkte PO/EO-Blockpolymere, die als nicht-ionische Tenside eingesetzt werden. Nano-protec-com^{®} von der Fa. Schoeller Textil AG ist eine Dispersion aus nichtionischen bzw. kationischen Fluorpolymeren und einem nicht-ionischen bzw. kationischen Oxim-blockierten Polyisocyanat als Extender, die als Bindephase eingesetzt wird. Lyofix^{®} MLF ist ein nicht-ionisches alkylmodifiziertes Melamin/Formaldehyd-Derivat. Zitronensäure dient zur pH-Regulierung und als Katalysator. Bermocoll^{®} ist ein Celluloseether.

### Beispiele

### Beispiel 1: Herstellung von aktivierten Teilchendispersionen

### Beispiel 1.1: Herstellung der aktivierten Teilchendispersion 1.1:

Zu einer Lösung von Pluronic PE 6200, Pluronic PE 6800 in 2-Propanol und Butylglycol wird unter Rühren perfluoriertes Silica (C-5 perfluoriert) zugesetzt. Anschliessend wird zuerst mit VE-Wasser und danach mit einer homogenen Lösung von Bermocoll E230 FQ (1 %ig) in VE-Wasser vermischt. Die mechanische Aktivierung der Dispersion erfolgt in einer Rührwerkskugelmühle unter folgenden Parametern.

Parameter der Aktivierung:
Rührwerkskugelmühle: Drais PML, ZrO₂-Mahlraumauskleidung
Mahlkugeln: Durchmesser 1,75 mm, ZrO₂
Füllgrad: 75 %
Durchsatz: 50 kg/h
Passagenanzahl: 8

Zusammensetzung der aktivierten Teilchendispersion 1.1:

| | |
|---|---|
| Perfluoriertes Silica | 63,2 g |
| 2-Propanol | 724 g |
| Butylglycol | 90 g |
| Pluronic PE 6200 | 21,5 |
| Pluronic PE 6800 | 5,4 g |
| Bermocoll E230 FQ | 6g |
| VE-Wasser | 1065 g |

### Beispiel 1.2: Herstellung der aktivierten Teilchendispersion 1.2:

Zu einer Lösung von Pluronic PE 6200, Pluronic PE 6800 in 2-Propanol und Butylglycol werden unter Rühren Teilchen aus perfluoriertem Aluminiumoxid (C6-perfluoriert) zugegeben, und nachfolgend wird mit einer homogenen Lösung von Bermocoll E230 FQ (0,66%ig) in VE-Wasser vermischt. Die mechanische Aktivierung der Dispersion erfolgt in einer Rührwerkskugelmühle unter folgenden Parametern.

Parameter der Aktivierung:
Rührwerkskugelmühle: Drais PML, ZrO₂-Mahlraumauskleidung
Mahlkugeln: Durchmesser 1,75 mm, ZrO₂
Füllgrad: 75 %
Durchsatz: 50 kg/h
Passagenanzahl: 8

Zusammensetzung der aktivierten Teilchendispersion 1.2:

| | |
|---|---|
| perfluoriertes Aluminiumoxid | 42,5 g |
| 2-Propanol | 454 g |
| Butylglycol | 38 g |
| Pluronic PE 6200 | 9,2 g |
| Pluronic PE 6800 | 2,2 g |
| Bermocoll E230 FQ | 3 g |
| VE-Wasser | 452 g |

### Beispiel 1.3: Herstellung der aktivierten Teilchendispersion 1.3:

Zu einer Lösung von Pluronic PE 6200, Pluronic PE 6800 in 2-Propanol und Butylglycol wird unter Rühren Aerosil^{®} 200, das mit Aminoalkyl- und perfluorierten Gruppen oberflächenmodifiziert ist, hinzugesetzt und nachfolgend mit einer homogenen Lösung von Bermocoll E230 FQ in VE-Wasser vermischt. Die mechanische Aktivierung der Dispersion erfolgt in einer Rührwerkskugelmühle unter folgenden Parametern.

Parameter der Aktivierung:
Rührwerkskugelmühle: Drais PML, ZrO₂-Mahlraumauskleidung
Mahlkugeln: Durchmesser 1,75 mm
Füllgrad: 75 %
Durchsatz: 55 kg/h
Passagenanzahl: 8

Zusammensetzung der aktivierten Teilchendispersion 1.3:

| | |
|---|---|
| Aminoalkyl/C6-perfluoriertes Aerosil 200 | 50,1 g |
| 2-Propanol | 474,5 g |
| Butylglycol | 44,6 g |
| Pluronic PE 6200 | 10,7 g |
| Pluronic PE 6800 | 2,7 |
| Bermocoll E230 FQ | 3 g |
| VE-Wasser | 414,5 g |

### Beispiel 2: Herstellung der Ausstattungsformulierungen

### Beispiel 2.1: Herstellung der Ausstattungsformulierungen 2.1:

### Beispiel 2.1.1 für Synthetikgewebe

Die aktivierte Teilchendispersion wird mit Tween^{®} 20, Schoeller Nano-protec-com (Schoeller Textil AG, Schweiz), 2-Propanol, Zitronensäure und Wasser unter Rühren gemischt und nachfolgend mit einer Emulgierpumpe homogenisiert.

Zusammensetzung der Ausstattungsformulierung 2.1.1:

| | |
|---|---|
| Aktivierte Teilchendispersion 1.1 | 62,5 g |
| Tween 20 | 1,5 g |
| 2-Propanol | 10 g |
| Schoeller Nano-protec-com | 72 g |
| Wässrige Zitronensäure | 0,3 g |
| Wasser | 833,7 g |

### Beispiel 2.1.2 für natürliche Gewebe

Die aktivierte Teilchendispersion wird mit Tween 20, Schoeller Nano-protec-com, 2-Propanol, Zitronensäure, Lyofix MLF (Huntsman) und Wasser unter Rühren gemischt und nachfolgend mit einer Emulgierpumpe homogenisiert.

Zusammensetzung der Ausstattungsformulierung 2.1.2:

| | |
|---|---|
| Aktivierte Teilchendispersion 1.1 | 62,5 g |
| Tween 20 | 1,5 g |
| Schoeller Nano-protec-com | 72 g |
| 2-Propanol | 10 g |
| Wässrige Zitronensäure | 0,3 g |
| Wasser | 833,7 g |
| Lyofix MLF | 20 g |

### Beispiele 2.2.1, 2.2.2 und 2.3.1 und 2.3.2

Es wird jeweils wie unter 2.1.1 und 2.1.2 beschrieben vorgegangen, jedoch wird anstelle der aktivierten Teilchendispersion 1.1 jeweils die entsprechende Teilchendispersion 1.2 bzw. 1.3 eingesetzt.

Zusammensetzung der Ausstattungsformulierung 2.2.1:

| | |
|---|---|
| Aktivierte Teilchendispersion 1.2 | 11,75 g |
| Tween 20 | 1,5 g |
| Schoeller Nano-protec-com | 72 g |
| 2-Propanol | 10 g |
| Wässrige Zitronensäure | 0,3 g |
| Wasser | 884,45g |

Zusammensetzung der Ausstattungsformulierung 2.2.2:

| | |
|---|---|
| Aktivierte Teilchendispersion 1.2 | 11,75 g |
| Tween 20 | 1,5 g |
| Schoeller Nano-protec-com | 72 g |
| 2-Propanol | 10 g |
| Wässrige Zitronensäure | 0,3 g |
| Wasser | 884,45g |
| Lyofix MLF | 20 g |

Zusammensetzung der Ausstattungsformulierung 2.3.1:

| | |
|---|---|
| Aktivierte Teilchendispersion 1.3 | 20 g |
| Tween 20 | 1,5 g |
| Schoeller Nano-protec-com | 72 g |
| 2-Propanol | 10 g |
| Wässrige Zitronensäure | 0,3 g |
| Wasser | 876,20 g |

Zusammensetzung der Ausstattungsformulierung 2.3.2:

| | |
|---|---|
| Aktivierte Teilchendispersion 1.3 | 20 g |
| Tween 20 | 1,5 g |
| Schoeller Nano-protec-com | 72 g |
| 2-Propanol | 10 g |
| Wässrige Zitronensäure | 0,3 g |
| Wasser | 876,20 g |
| Lyofix MLF | 20 g |

### Beispiel 3: Ausrüstung von Substraten

### Beispiel 3.1.1 Ausrüstung von Polyamidsubstraten

Ein Polyamidgewebe mit einem Flächengewicht von 120 g/m² wird mit der Ausstattungsformulierung 2.1.1 auf einem Foulard appliziert. Der Anpressdruck der Walzen beträgt 15 bar, woraus eine Formlierungsaufnahme von 62 % resultiert. Die Auftragsgeschwindigkeit beträgt 1,5 m/min. Das Material wird zweimal geklotzt (0,75 m/min). Anschliessend wird das behandelte Polyamidgewebe 150 s bei 140°C unter Umluft getrocknet und nachfolgend 45 s bei 170°C kondensiert. Man erhält das erfindungsgemäss ausgerüstete Polyamidgewebe 3.1.1.

### Beispiel 3.1.2 Ausrüstung von Baumwollsubstraten

Ein Baumwollgewebe mit einem Flächengewicht von 150 g/m² wird mit der Ausstattungsformulierung 2.1.2 auf einem Foulard appliziert. Der Anpressdruck der Walzen beträgt 15 bar, woraus eine Formiierungsaufnahme von 65 % resultiert. Die Auftragsgeschwindigkeit beträgt 1,5 m/min. Das Material wird zweimal geklotzt (0,75 m/min). Anschliessend wird das behandelte Baumwollgewebe 150 s bei 140°C unter Umluft getrocknet und nachfolgend 45 s bei 170°C kondensiert. Man erhält das erfindungsgemäss ausgerüstete Baumwollgewebe 3.1.2.

### Beispiele 3.2.1, 3.2.2, 3.3.1 und 3.3.2

Es wird jeweils wie unter 3.1.1 und 3.1.2 beschrieben vorgegangen, jedoch wird anstelle der Ausstattungsformulierung 2.1.1 und Ausstattungsformulierung 2.1.2 jeweils die entsprechende Ausstattungsformulierung 2.2.1 und 2.2.2 bzw. die entsprechende Ausstattungsformulierung 2.3.1 und 2.3.2 eingesetzt. Man erhält das erfindungsgemäss ausgerüstete Gewebe 3.2.1, 3.2.2, 3.3.1 und 3.3.2

### Vergleichsbeispiel

Es wird eine nicht aktivierte Teilchendispersion 1.4 hergestellt, wobei in Analogie zu 1.1 gearbeitet wird, ausser dass keine Aktivierung in der Rührwerkskugelmühle durchgeführt wird; sowie die entsprechenden Ausstattungsformulierungen 2.4.1 und 2.4.2 in Analogie zu 2.1.1 und 2.1.2 und ausgerüstete Gewebe 3.4.1 und 3.4.2 in Analogie zu 3.1.1 und 3.1.2.

### Bundesmann Beregnungstest DIN 53888

Ein Prüfling mit 14 cm Durchmesser wird 10 min. beregnet. Das Abperlen und das Tropfenbild werden nach 1 min., nach 5 min. und nach 10 min. beurteilt. Die beste Note ist 5, die schlechteste 1. Die Wasseraufnahme wird durch Wiegen bestimmt.

### Öl Test AATCC 118

Auf den Prüfling werden 8 verschiedene Testsubstrate - Öle aufgebracht und nach 30 s beurteilt. Der Tropfen soll eine Kugel formen und nicht netzen. Bewertung von 1 (schlechteste) bis 8.

### Scheuerung Martindale

In Anlehnung an SN 198529 Belastung: 9 kPa

100 Touren trocken + kondensieren.

Ein Prüfling mit 14 cm Durchmesser wird mit einem trockenen Filz eingespannt und mit einem Wollgewebe 100 Touren gescheuert.

Der PA-Prüfling wird bei 120° C 1 min. kondensiert.

Der CO- Prüfling wird bei 170°C 1 min. kondensiert.

Anschliessend wird der Bundesmann Beregnungstest durchgeführt.

100 Touren nass + kondensieren.

Ein Prüfling mit 14 cm Durchmesser wird mit einem nassen (1 min. tauchen in Weichwasser) Filz eingespannt und mit einem Wollgewebe 100 Touren gescheuert. 24 Stunden bei Raumtemperatur trocknen.

Der PA-Prüfling wird bei 120° C 1 min. kondensiert.

Der CO-Prüfling wird bei 170°C 1 min. kondensiert.

Anschliessend wird der Bundesmann Beregnungstest durchgeführt.

### Waschen nach ISO 6330

Testwerte der erfindungemässen Textilproben sowie der Vergleichsprobe

| Textilprobe | Abpelnote Original | | | Abperlnote nach 100 Touren trocken+kond | | | Abperlnote nach 100 Touren nass+kond | | | Abperlnote 5x gewaschen 40°C | | |
|---|---|---|---|---|---|---|---|---|---|---|---|---|
| | 1min. | 5min. | 10min. | 1min. | 5min. | 10min. | 1min. | 5min. | 10min. | 1min. | 5min. | 10min. |
| 3.1.1 | 5 | 5 | 5 | 5 | 5 | 5 | 5 | 5 | 5 | 4 | 4 | 4 |
| 3.1.2 | 5 | 5 | 5 | 5 | 4 | 4 | 5 | 4 | 4 | 5 | 5 | 4 |
| 3.2.1 | 5 | 5 | 5 | 5 | 5 | 5 | 5 | 5 | 5 | 5 | 5 | 5 |
| 3.2.2 | 5 | 5 | 5 | 5 | 5 | 5 | 5 | 5 | 5 | 5 | 5 | 5 |
| 3.3.1 | 5 | 5 | 5 | 5 | 5 | 5 | 5 | 5 | 5 | 5 | 5 | 5 |
| 3.3.2 | 5 | 5 | 5 | 5 | 5 | 5 | 5 | 5 | 5 | 5 | 5 | 5 |
| 3.4.1 (Vergleich) | 5 | 4 | 4 | 4 | 3 | 3 | 5 | 4 | 3 | 3 | 3 | 2 |
| b.4.2 (Vergleich) | 5 | 5 | 5 | 4 | 2 | 2 | 5 | 2 | 2 | 4 | 3 | 2 |

Die erfindungsgemässen Ausrüstungsformulierungen zeigten gegenüber den Vergleichsbeispielen (3.4.1. und 3.4.2), bei denen die Teilchen nicht durch Zerkleinerung aktiviert wurden, eine deutlich verbesserte Haltbarkeit der Ausrüstung.

## Patentansprüche

1. Verwendung einer Ausrüstungsformulierung, welche ein Dispersionsmittel, darin dispergierte aktivierte Teilchen mit hydrophoben und/oder oleophoben Oberflächengruppen und ein Bindemittel umfasst, zur hydrophoben und/oder oleophoben Ausrüstung von Fasern oder Textilien, **dadurch gekennzeichnet, dass** das Dispersionsmittel Wasser oder ein Gemisch aus Wasser und wenigstens einem organischen Lösungsmittel ausgewählt aus der Gruppe bestehend aus Methanol, Ethanol, Propanol, Aceton, Ethylenglykol, Propylenglykol, Di-, Tri- oder Polyglycolether, Dimethylsulfoxid, Dimethylformamid oder Acetonitril ist.

2. Verwendung einer Ausrüstungsformulierung nach Anspruch 1, **dadurch gekennzeichnet, dass** die Fasern oder Textilien Polyester, Polyamid, Baumwolle, Cellulose oder Schafwolle beinhalten oder daraus bestehen.

3. Verwendung einer Ausrüstungsformulierung nach einem der Anspruche 1 oder 2, **dadurch gekennzeichnet, dass** die Fasern oder Textilien vorbehandelt sind.

4. Verfahren zur hydrophoben und/oder oleophoben Ausrüstung von Fasern oder Textilien, bei dem eine Ausrüstungsformulierung, die ein Dispersionsmittel, darin dispergierte aktivierte Teilchen mit hydrophoben und/oder oleophoben Oberflächengruppen und ein Bindemittel umfasst, auf Fasern oder Textilien aufgetragen und dann getrocknet wird, **dadurch gekennzeichnet, dass** das Dispersionsmittel Wasser oder ein Gemisch aus Wasser und einem organischen Lösungsmittel ausgewählt aus der Gruppe Methanol, Ethanol, Propanol, Aceton, Ethylenglykol, Propylenglykol, Di-, Tri- oder Polyglycolether, Dimethylsulfoxid, Dimethylformamid oder Acetonitril ist.

5. Verfahren nach Anspruch 4, **dadurch gekennzeichnet, dass** die Fasern oder Textilien vor Auftrag der Ausrustungsformulierung durch Aufbringen eines Primers, Behandeln mit Säure oder Lauge vorbehandelt werden.

## Claims

1. Use of a finishing formulation comprising a dispersion medium, activated particles dispersed therein and having hydrophobic and/or oleophobic surface groups and a binder, for hydrophobic and/or oleophobic finishing of fibres or textiles, **characterized in that** the dispersion medium is water or a mixture of water and at least one organic solvent selected from the group consisting of methanol, ethanol, propanol, acetone, ethylene glycol, propylene glycol, di-, tri- or polyglycol ether, dimethyl sulphoxide, dimethylformamide or acetonitrile.

2. Use of a finishing formulation according to Claim 1, **characterized in that** the fibres or textiles contain or consist of polyester, polyamide, cotton, cellulose or sheep's wool.

3. Use of a finishing formulation according to either of Claims 1 and 2, **characterized in that** the fibres or textiles have been pretreated.

4. Process for hydrophobic and/or oleophobic finishing of fibres or textiles wherein a finishing formulation comprising a dispersion medium, activated particles dispersed therein and having hydrophobic and/or oleophobic surface groups and a binder is applied to fibres or textiles and then dried, **characterized in that** the dispersion medium is water or a mixture of water and an organic solvent selected from the group consisting of methanol, ethanol, propanol, acetone, ethylene glycol, propylene glycol, di-, tri- or polyglycol ether, dimethyl sulphoxide, dimethylformamide or acetonitrile.

5. Process according to Claim 4, **characterized in that** the fibres or textiles are pretreated by applying a primer, treating with acid or alkali before applying the finishing formulation.

## Revendications

1. Utilisation d'une composition d'apprêtage, qui comprend un dispersant, des particules activées à groupes superficiels hydrophobes et/ou oléophobes dispersées dans celui-ci et un liant, pour l'apprêtage hydrophobe et/ou oléophobe de fibres ou de textiles, **caractérisée en ce que** le dispersant contient de l'eau ou un mélange d'eau et d'au moins un solvant organique choisi dans le groupe constitué par le méthanol, l'éthanol, le propanol, l'acétone, l'éthylèneglycol, le propylèneglycol, le di-, tri- ou polyglycoléther, le diméthylsulfoxyde, le diméthylformamide ou l'acétonitrile.

2. Utilisation d'une composition d'apprêtage selon la revendication 1, **caractérisée en ce que** les fibres ou textiles comportent du polyester, du polyamide, du coton, de la cellulose ou de la laine de mouton on consistent en ceux-ci.

3. Utilisation d'une composition d'apprêtage selon la revendication 1 ou 2, **caractérisée en ce que** les fibres ou textiles sont prétraités.

4. Procédé pour l'apprêtage hydrophobe et/ou oléophobe de fibres ou textiles, dans lequel on applique sur les fibres ou textiles une composition d'apprêtage qui comprend un dispersant, des particules activées à groupes superficiels hydrophobes et/ou oléophobes dispersées dans celui-ci et un liant, et ensuite on les sèche, **caractérisé en ce qu'**on utilise comme dispersant l'eau ou un mélange d'eau et d'un solvant organique choisi dans le groupe constitué par le méthanol, l'éthanol, le propanol, l'acétone, l'éthylèneglycol, le propylèneglycol, le di-, tri- ou polyglycoléther, le diméthylsulfoxyde, le diméthylformamide ou l'acétonitrile.

5. Procédé selon la revendication 4, **caractérisé en ce qu'**avant l'application de la composition d'apprêtage on prétraite les fibres ou textiles par application d'un primaire, traitement par un acide ou une solution alcaline.
